# EUROPEAN PATENT APPLICATION

(11) **EP 1 568 992 A1**
(43) Date of publication of application: **31.08.2005**
(21) Application number: 03777220.9
(22) Date of filing: 03.12.2003
(51) Int. Cl.: G01N 27/327

(54) **ANALYZING DEVICE**

(30) Priority: 04.12.2002 JP 2002352142
(71) Applicant: Arkray, Inc., Kyoto 601-8045 (JP); MATSUSHITA ELECTRIC INDUSTRIAL CO., LTD., Osaka 571-8501 (JP)
(72) Inventor: OURA, Yoshimi, c/o Arkray, Inc., Kyoto-shi, Kyoto 601-8045 (JP); SHIMADA, Kazuya, c/o Arkray, Inc., Kyoto-shi, Kyoto 601-8045 (JP); AOKI, Tsukasa, Matsuyama-shi, Ehime 790-0052 (JP); TAKAWAKI, Taiichirou, Matsuyama-shi, Ehime 791-0245 (JP)
(74) Representative: Pluckrose, Anthony William
(86) International application number: PCT/JP2003/015500
(87) International publication number: WO 2004/051250

(57) **Abstract**

The present invention relates to an analyzing device (1) used with an analytical tool (2) mounted to the device, where the analytical tool provides a reaction field including sample liquid and includes a first and a second electrodes (20A, 20B) for applying voltage to the reaction field. The analyzing device (1) includes a connector (10) coming into contact with the first and the second electrodes (20A, 20B), an analysis circuit (13) for performing sample analysis based on sample liquid information obtained from the analytical tool (2) through the connector (10), and a disturbing-noise countermeasure unit (11) which absorbs disturbing noise and which is provided closer to the connector (10) than to the analysis circuit (13).

## Description

### TECHNICAL FIELD

The present invention relates to a device for analyzing a particular component in a sample liquid.

### BACKGROUND ART

In a typical method for measuring a blood glucose level, redox reaction isutilized. Meanwhile, portable handheld blood glucose level measuring apparatuses are widely used so that the blood glucose level can be easily measured at home or away from home. In such a portable blood glucose level measuring apparatus, the blood glucose level is measured by mounting a disposable biosensor for providing an enzymatic reaction field to the apparatus and supplying blood to the biosensor.

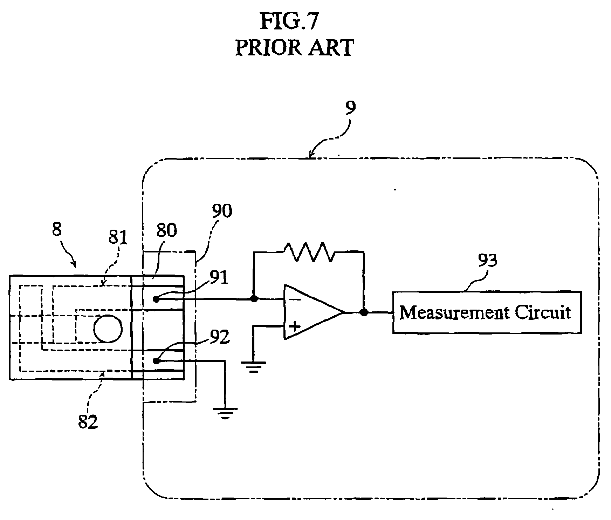

The measurement of a blood glucose level may be performed by utilizing an electrochemical technique. In such a case, the biosensor as shown in Fig. 7 may be used which comprises an insulating substrate 80, and a first and a second electrodes 81 and 82 for applying voltage to the enzymatic reaction field. The blood glucose level measuring apparatus 9 comprises a connector 90 including a first and a second terminals 91 and 92 for coming into contact with the first and the second electrodes 81 and 82, and a measurement circuit 93 for determining the blood glucose level based on the information from the connector 90. (See JP-B 8-10208, for example.)

The blood glucose level measuring apparatus 9 is influenced by various disturbing noise. The disturbing noise may influence measurement results or destroy the electronic part to make the measurement impossible. Particularly, a portable small measurement apparatus is liable to static electricity from a human body. Generally, the biosensor 8 is manually mounted to the blood glucose level measuring apparatus 9 shown in Fig. 7. Therefore, the static electricity, if built up in the human body, is discharged to the first and the second electrodes 81 and 82 of the biosensor 8 or the first and the second terminals 91 and 92 of the blood glucose level measuring apparatus 9. If no countermeasure is taken against such static electricity, the static electricity is inputted, as disturbing noise, into the analysis circuit through the first electrode 81, for example. Therefore, as the conventional measures to reduce the influence of static electricity, the arrangement of the first and the second electrodes 81, 82 of the biosensor 8 and the first and the second terminals 91, 92 of the blood glucose level measuring apparatus 9 has been contrived, or the withstand voltage of each electronic part constituting the measurement circuit 93 has been increased.

Recently, there is a tendency to reduce the thickness of the first and the second electrodes 81 and 82 to reduce the manufacturing cost of the biosensor 8. Further, to adapt the biosensor 8 to the portable blood glucose level measuring apparatus 9, the size of the biosensor 8, including the size of the first and the second electrodes 81 and 82, should be reduced. In such cases, the resistance of the first and the second electrodes 81 and 82 increases. Therefore, in the circuit structure shown in Fig. 7, for example, Joule heat is generated near the contact point between the first electrode 81 and the first terminal 91 of the blood glucose level measuring apparatus 9 when static electricity flows through the contact point. When the generated Joule heat is high, the first electrode 81 may melt. In this case, the biosensor 8 mounted to the apparatus cannot measure the blood glucose level. Further, melt of the first electrode 81 of the biosensor 8 adheres to the first terminal 91 of the blood glucose level measuring apparatus 9, thereby changing the effective resistance of the first terminal. Unfavorably, this leads to an error in the subsequent measurement of response current. Such a problem becomes more significant as the thickness of the first electrode 81 is made smaller.

### DISCLOSURE OF THE INVENTION

An obj ect of the present invention is to reduce the influence of disturbing noise, specifically, to make it possible to cope with static electricity even when the resistance of an electrode of an analytical tool is relatively high.

According to the present invention, there is provided an analyzing device used with an analytical tool mounted to the device, where the analytical tool provides a reaction field including sample liquid and includes a first and a second electrodes for applying voltage to the reaction field. The analyzing device comprises a connector for coming into contact with the first and the second electrodes, and an analysis circuit for performing sample analysis based on sample liquid information obtained from the analytical tool through the connector. The apparatus further includes a disturbing-noise countermeasure unit for absorbing disturbing noise inputted through the connector.

In the analyzing device, the connector and the analysis circuit are connected to each other by a signal line, for example. The disturbing-noise countermeasure unit may be provided at an inner point of the signal line or at the connector. The disturbing-noise countermeasure unit may include a resistor, a capacitor, a coil, a ferrite core or a varistor. The disturbing-noise countermeasure unit may comprise a combination of two or more components exemplified above.

As the analytical tool, use may be made of one that is adapted to cause reaction of glucose in blood. Preferably, in this case, the analysis circuit calculates the glucose level in blood based on the current obtained when voltage is applied to the reaction field by utilizing the first and the second electrodes.

The concept of the present invention to provide a disturbing-noise countermeasure unit is particularly effective for a portable analyzing device. To make an analyzing device portable, the dimension of the analyzing device may be no more than 400mm×300mm×300mm, and the weight of the apparatus may be no more than 20kg. In this case, to store the analyzing device in a bag or a pocket, it is preferable that the dimension of the apparatus is no more 150mm×100mm×500mm and the weight is no more than 500g, and more preferably, the dimension is no more than 100mm×60mm×15mm and the weight is no more than 70g.

### BRIEF DESCRIPTION OF THE DRAWINGS

Fig. 1 a perspective view showing an analyzing device according to the present invention, with a biosensor mounted thereto.
Fig. 2 is a sectional view taken along lines II-II in Fig. 1.
Fig. 3 schematically illustrates the state shown in Fig. 1, with the analyzing device represented in circuit block diagram and with the biosensor represented in plan view.
Fig. 4 is a circuit diagram showing examples of circuit of the disturbing-noise countermeasure unit.
Fig. 5 is an exploded perspective view of the biosensor.
Fig. 6 is a schematic view corresponding to Fig. 3, showing another example of analyzing device.
Fig. 7 is a schematic view for describing a conventional portable blood glucose level measuring device and a biosensor.

### BEST MODE FOR CARRYING OUT THE INVENTION

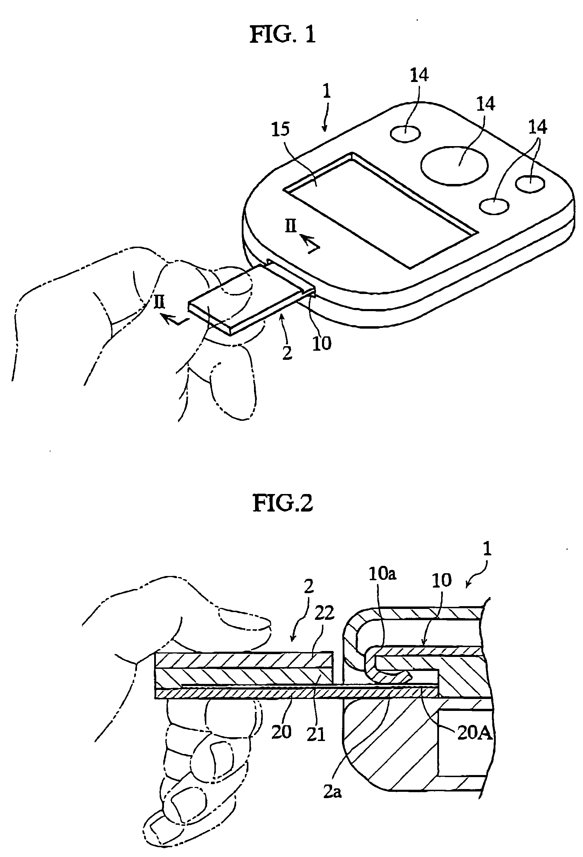

The analyzing device 1 shown in Figs. 1 through 3 is of a portable type, to which a biosensor 2 is mounted in use. The analyzing device 1 includes a connector 10, a disturbing-noise countermeasure unit 11, a current/voltage conversion amplifier 12, an analysis circuit 13, a plurality of operation buttons 14 and a display 15.

The connector 10, utilized for inserting an end 2a of the biosensor 2, includes a first and a second terminals 10a and 10b. The first and the second terminals 10a and 10b, utilized for applying voltage to a target portion of the biosensor 2, is made springy to press the end 2a of the biosensor 2, as shown in Fig. 2. The connector 10 is electrically connected to the analysis circuit 13 via a signal line 16. The disturbing-noise countermeasure unit 11 and the current/voltage conversion amplifier 12 are arranged on the signal line 16.

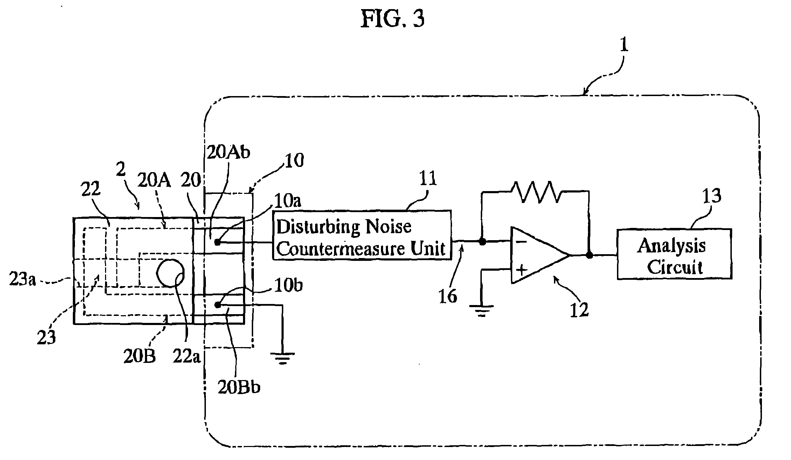

The disturbing-noise countermeasure unit 11 shown in Fig. 3 copes with static electricity coming from a human body, for example, and includes at least one of a resistor, a capacitor, a coil, a ferrite core and a varistor.

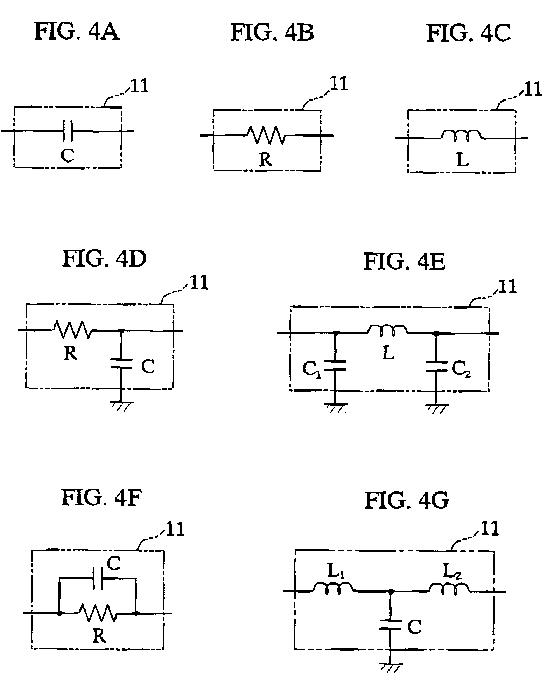

Figs. 4A-4G show examples of circuit of the disturbing-noise countermeasure unit 11. In the example of circuit shown in Fig. 4A, the disturbing-noise countermeasure unit 11 includes a capacitor C. In the example of circuit shown in Fig. 4B, the disturbing-noise countermeasure unit 11 includes a resistor R. In the example of circuit shown in Fig. 4C, the disturbing-noise countermeasure unit 11 includes a coil L. In the example of circuit shown in Fig. 4D, the disturbing-noise countermeasure unit 11 includes a resistor R, and a capacitor C disposed on a line connected to ground downstream of the resistor R. In the example of circuit shown in Fig. 4E, the disturbing-noise countermeasure unit 11 includes a coil L, and a capacitor C₁ and C₂ respectively disposed upstream and downstream of the coil L on lines connected to ground. In the example of circuit shown in Fig. 4F, the disturbing-noise countermeasure unit 11 includes a resistor R and a capacitor C arranged in parallel. In the example of circuit shown in Fig. 4G, the disturbing-noise countermeasure unit 11 includes two coils L₁ and L₂, and a capacitor C disposed between the coils L₁ and L₂ on a line connected to ground.

The circuit structure of the disturbing-noise countermeasure unit 11 is not limited to those described above. Further, the parts of the disturbing-noise countermeasure unit are not limited to those exemplified above. The disturbing-noise countermeasure unit may comprise other parts which are capable of removing or reducing disturbing noise.

The current/voltage conversion amplifier 12 shown in Fig. 3 converts the information obtained, as a current, from the biosensor 2 into a voltage to be inputting into the analysis circuit 13.

For example, based on the information outputted from the current/voltage conversion amplifier 12, the analysis circuit 13 calculates the concentration of a particular component in a sample liquid or determines whether or not the content of a particular component in the sample liquid is not less than a predetermined level. The analysis circuit 13, having functions equivalent to those of a so-called microprocessor, is composed of a CPU for controlling operations such as calculation, a ROM for storing an operation program for e.g. calculation, a RAM for storing information required for operation, and so forth.

The operation buttons 14 are used for inputting various kinds of information into the analyzing device 1. For example, the buttons are used for sending analysis start instruction or for setting the analyzing device 1.

The display 15 may comprise a liquid crystal display unit, for example, for displaying e.g. analysis results, procedure instructions, and error messages.

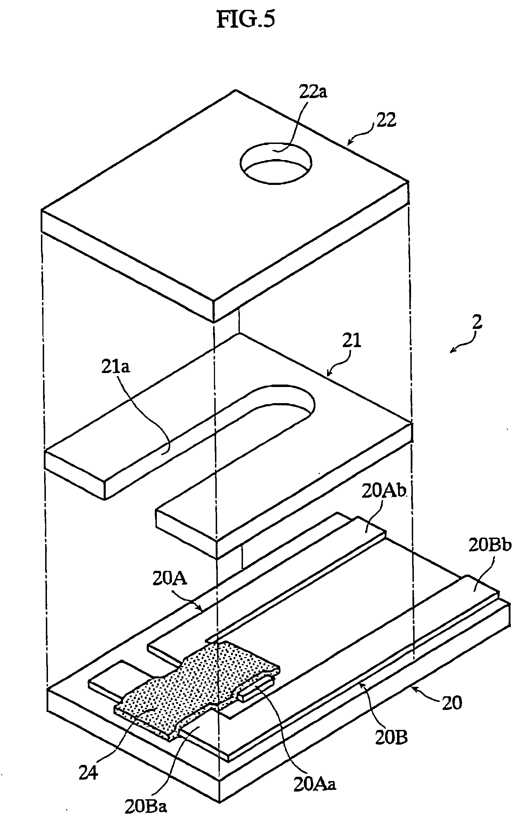

As shown in Figs. 2, 3 and 5, the biosensor 2 includes a substrate 20, a cover 22 stacked on the substrate via a spacer 21, and a flow path 23 defined by the parts 20-22. In the flow path 23, a reaction field is provided, and the sample liquid introduced via a sample liquid introduction port 23a is caused to flow toward a hole 22a of the cover 22 by capillary action. The size of the flow path 23 is determined by a slit 21a formed in the spacer 21.

The substrate 20 is provided with a working electrode 20A and a counter electrode 20B for applying voltage to the reaction field. The ends 20Aa and 20Ba of the working electrode 20A and the counter electrode 20B are connected to each other by a reagent portion 24. As better shown in Figs. 2 and 3, when the biosensor 2 is mounted to the connector 10 of the analyzing device 1, the ends 20Ab and 20Bb of the working electrode 20A and the counter electrode 20B are brought into contact with the first and the second terminals 10a and 10b of the analyzing device 1. The reagent portion 24 is in a solid state containing an oxidoreductase and an electron mediator, for example, and dissolves when a sample liquid is supplied thereto. The kinds of oxidoreductase and electron mediator are selected depending on the kind of the component to be measured, for example. For example, in the case of measuring a glucose level, glucose dehydrogenase or glucose oxidase is used as the oxidoreductase, and potassium ferricyanide is used as the electron mediator.

To perform the analysis of a sample liquid by the analyzing device 1, after the biosensor 2 is mounted to the analyzing device 1, the sample liquid (typically blood or urine) is introduced through the sample introduction port 23a of the biosensor 2. In the biosensor 2, the sample liquid moves within the flow path 23 by capillary action and fills the flow path 23. The sample liquid dissolves the reagent portion 24 to produce a liquid phase reaction system in the flow path 23. Then, voltage is applied to the liquid phase reaction system by e.g. a DC power source (not shown) of the analyzing device 1. The response current obtained is inputted into the current/voltage conversion amplifier 12 through the working electrode 20A of the biosensor 2, the first terminal 10a of the analyzing device 1 and the disturbing-noise countermeasure unit 11. The information converted from current into voltage at the current/voltage conversion amplifier 12 is then converted into a digital signal by a non-illustrated A/D converter and inputted into the analysis circuit 13. Based on the digital signal corresponding to the response current, the analysis circuit 13 performs analysis of the sample liquid such as determination of the glucose level in blood. The analysis result is displayed at the display 15 of the analyzing device 1, for example.

In mounting the biosensor 2 to the analyzing device 1, as noted above, static electricity built up in a human body may be discharged to the working electrode 20A and the counter electrode 20B of the biosensor 2, or the first and the second terminals 10a, 10b of the analyzing device 1. In the analyzing device 1, the disturbing-noise countermeasure unit 11 copes with such static electricity. Specifically, when static electricity comes from the outside of the analyzing device 1, the disturbing-noise countermeasure unit 11 consumes or stores the static electricity. Therefore, it is possible to reduce the consumption of static electricity, i.e. the generation of Joule heat adjacent to the contact point between the first terminal 10a of the analyzing device 1 and the working electrode 20A of the biosensor 2, so that the end 20Ab of the working electrode 20A is prevented from melting. Moreover, by absorbing static electricity by the disturbing-noise countermeasure electrode 11, the input of static electricity into the analysis circuit 13 as noise can be prevented. Therefore, in the analyzing device 1, measurement failure and measurement error due to static electricity can be prevented. The disturbing-noise countermeasure unit 11 absorbs not only the static electricity coming from a human body but also other disturbing noise. Particularly, since the disturbing-noise countermeasure unit 11 of the analyzing device 1 is provided closer to the connector 10 than to the analysis circuit 13, the disturbing noise inputted through the connector 10 is reliably prevented frombeing inputted into the analysis circuit 13.

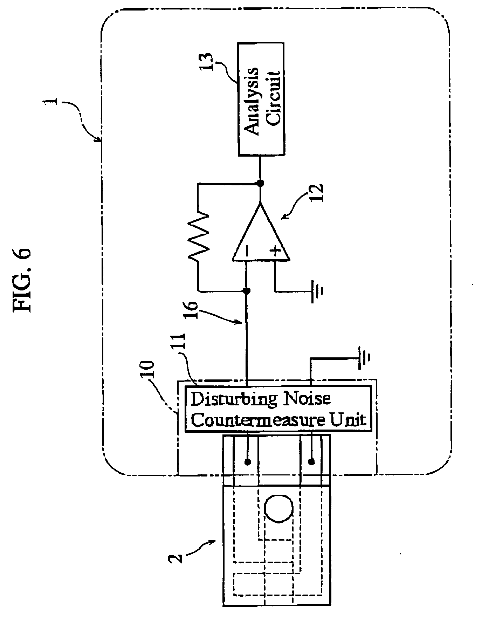

In the above embodiment, the disturbing-noise countermeasure unit 11 is provided at an inner point of the signal line 16 that connects the analysis circuit 13 and the connector 10 to each other. However, as shown in Fig. 6, the disturbing-noise countermeasure unit 11 may be provided at the connector 10.

## Claims

1. An analyzing device used with an analytical tool mounted to the device, the analytical tool providing a reaction field that includes sample liquid and comprising a first and a second electrodes for applying voltage to the reaction field, the analyzing device comprising: a connector coming into contact with the first and the second electrodes; and an analysis circuit for performing sample analysis based on sample liquid information obtained from the analytical tool through the connector;
wherein the analyzing device comprises a disturbing-noise countermeasure unit for absorbing disturbing noise inputted through the connector.

2. The analyzing device according to claim 1, further comprising a signal line connecting the connector and the analysis circuit to each other;
wherein the disturbing-noise countermeasure unit is provided at an inner point of the signal line.

3. The analyzing device according to claim 1, wherein the disturbing-noise countermeasure unit is provided at the connector.

4. The analyzing device according to claim 1, wherein the disturbing-noise countermeasure unit comprises a resistor.

5. The analyzing device according to claim 1, wherein the disturbing-noise countermeasure unit comprises a capacitor.

6. The analyzing device according to claim 1, wherein the disturbing-noise countermeasure unit comprises a coil.

7. The analyzing device according to claim 1, wherein the disturbing-noise countermeasure unit comprises a ferrite core.

8. The analyzing device according to claim 1, wherein the disturbing-noise countermeasure unit comprises a varistor.

9. The analyzing device according to claim 1, wherein the disturbing-noise countermeasure unit comprises a combination of at least two selected from the group consisting of a resistor, a capacitor, a coil, a ferrite core and a varistor.

10. The analyzing device according to claim 9, wherein the disturbing-noise countermeasure unit comprises a combination of at least two selected from the group consisting of the resistor, the capacitor and the coil.

11. The analyzing device according to claim 1, wherein the analytical tool is adapted to measure a glucose level in blood; and
wherein the analysis circuit calculates the glucose level in blood based on a current obtained when voltage is applied to the reaction field by utilizing the first and the second electrodes.

12. The analyzing device according to claim 11, wherein the analytical tool comprises a reagent portion containing a reagent to react with glucose.

13. The analyzing device according to claim 1, wherein the device is portable.
